# EUROPEAN PATENT SPECIFICATION

(11) **EP 3 597 031 B1**
(45) Date of publication and mention of the grant of the patent: **06.10.2021**
(21) Application number: 19180017.6
(22) Date of filing: 13.06.2019
(51) Int. Cl.: A01F 25/20

(54) **DEVICE FOR SEPARATING COMPACTED FEED FROM A BULK FEED STOCK AND AUTOMATIC FEEDING SYSTEM USING SUCH A DEVICE**
VORRICHTUNG ZUM TRENNEN VON VERDICHTETEM TIERFUTTER AUS EINEM MASSEFUTTERROHSTOFF UND AUTOMATISCHES FÜTTERUNGSSYSTEM MIT VERWENDUNG SOLCH EINER VORRICHTUNG
DISPOSITIF DE SÉPARATION D'ALIMENTATION COMPACTE À PARTIR D'UN STOCK D'ALIMENTATION EN VRAC ET SYSTÈME D'ALIMENTATION AUTOMATIQUE À L'AIDE D'UN TEL DISPOSITIF

(30) Priority: 18.07.2018 NL 2021337
(43) Date of publication of application: 22.01.2020
(73) Proprietor: Lely Patent N.V., 3147 PB Maassluis (NL)
(72) Inventor: VAN DEN BERG, Karel, 3147 PB Maassluis (NL); SIE, Howard, 3147 PB Maassluis (NL); PASTOOR, Jan Lambertus, 3147 PB Maassluis (NL)
(74) Representative: Octrooibureau Van der Lely N.V.

(56) References cited:
- EP-A1- 3 132 674
- EP-A1- 3 326 457
- BE-A- 868 972
- DE-A1- 3 145 957
- DE-A1- 4 401 814
- FR-A1- 2 683 120

## Description

The present invention relates to a device for separating compacted feed, such as silage, from a bulk feed stock, such as a silo, said device comprising at least one cutting element which can be driven rotatably about an axis of rotation by a drive unit and which is mounted on a moveable frame structure in such a manner that the at least one cutting element can be moved relative to the bulk feed stock.

Such devices are used e.g. in automatic feeding systems, such as the Lely Vector®, for processing feed for livestock and are known in the art, e.g. from EP 2 692 224 A2. The device described therein is rather slow and inert. There is a need for an improved device.

BE 868 972 A discloses a silage cutter for hitching to the three-point linkage of a tractor by an arm with roller cutter. The arm is horizontally and vertically pivotable at right angles to the direction of travel of the tractor.

It is an object of the present invention to provide an improved device for separating compacted feed from a bulk feed stock.

The invention achieves the object at least in part by means of a device according to claim 1, in particular a device for separating compacted feed, such as silage, from a bulk feed stock, such as a silo, said device comprising at least one cutting element which can be driven rotatably about an axis of rotation by a drive unit and which is mounted on a moveable frame structure in such a manner that the at least one cutting element can be moved relative to the bulk feed stock, wherein the axis of rotation of at least one cutting element is pivotably adjustable relative to the frame structure, and wherein the device comprises two cutting elements mounted adjacently on the frame structure, their axes of rotation preferably extending in different, substantially horizontal planes.

In this way, an efficient cutting action is enabled, allowing for a simple frame structure. There is less need for (re)positioning of the frame structure, making the device more flexible and faster. The device is also more powerful.

The invention further relates to an automatic feeding system with an autonomously moveable feeding device for feeding animals, said device comprising a feed container for accommodating feed, an automatic loading device for loading feed into the feed container, and a feed dispensing device for dispensing feed from the feed container, wherein such a device for separating compacted feed from a bulk feed stock is used to provide separated feed for the automatic loading device.

In this way, an improved automatic feeding system is provided, wherein the autonomously moveable feeding device does not have to separate the feed from the bulk feed stock, which would be too energy-consuming.

Suitable and advantageous embodiments are described in the dependent claims, as well as in the description below.

The device may advantageously be designed such that the moveable frame structure is suitable for repeatedly positioning the cutting element(s) above an upper edge of the bulk feed stock and then lowering the cutting element(s) in a cutting movement through the bulk feed stock. This enables a simple and efficient cutting action making use of gravity.

In a further embodiment of the device, the moveable frame structure is provided with adjusting means for pivotably adjusting the axis of rotation of at least one cutting element relative to the frame structure between cutting movements. This allows for efficient cutting without losing time with the adjustment.

In a still further embodiment the frame structure is mounted on an autonomous vehicle. This provides a flexible and user-friendly construction.

Advantageously, the autonomous vehicle is provided with sensors for determining the (relative) position of the feed stock, the vehicle and the cutting element(s), and a control unit connected to the sensors and the frame structure and suitable for positioning the vehicle and the frame with the cutting element(s). Thus, a fully automated construction is provided.

In a simple embodiment, the frame structure comprises a moveable arm and the device comprises a single cutting element mounted on the moveable arm. This is a simple and cheap solution.

The moveable arm may be suitable for, firstly, positioning the cutting element above an upper edge of the bulk feed stock and then lowering the cutting element in a first cutting movement through the bulk feed stock, the axis of rotation of the cutting element being oriented under a first angle to the normal of the feed stock front surface, and secondly, positioning the cutting element slightly laterally displaced above the upper edge of the bulk feed stock and then lowering the cutting element in a second cutting movement through the bulk feed stock, the axis of rotation of the cutting element being oriented under a second angle to the normal of the feed stock front surface, the second angle being different from, preferably substantially opposite to the first angle. In this way, a triangular, cylindrical part can be cut out.

Advantageously, the axes of rotation of the cutting elements are individually or jointly adjustable relative to the frame structure. Thus, an efficient and simple construction is provided.

The axes of rotation of the cutting elements, seen in vertical direction, may extend substantially under an angle of 60 degrees to one another, the circumferences of the cutting elements, again seen in vertical direction, slightly overlapping one another. This has proven to be a highly efficient embodiment. The overlapping cutting elements (seen in vertical direction) allow for a clean cut.

Advantageously, the frame structure is suitable for, firstly, positioning the cutting elements above an upper edge of the bulk feed stock and then lowering the cutting elements in a first cutting movement through the bulk feed stock, the axes of rotation of the cutting elements in their respective horizontal planes being oriented substantially symmetrically to the normal of the substantially vertical feed stock front surface under angles of substantially 30 degrees, and secondly, repeatedly positioning the cutting elements slightly laterally displaced above the upper edge of the bulk feed stock and then lowering the cutting elements in a further cutting movement through the bulk feed stock, the axes of rotation of the cutting elements in their respective horizontal planes being oriented under angles of substantially 0 degrees and 60 degrees, respectively, to the normal of the substantially vertical feed stock front surface. In this way, the first cutting movement 'opens up' the feed stock front surface, enabling efficient cutting in the further cutting movements.

In a highly advantageous embodiment, the at least one cutting element comprises a circular saw blade. This constitutes a very energy-efficient solution.

Each circular saw blade may advantageously be drivable by an electric motor. This enables an easy independent control, e.g. with an adjustable speed of revolution.

In a further embodiment, the frame structure is capable of providing a movement of the at least one cutting element in three dimensions relative to the bulk feed stock. This provides versatility and efficiency.

In an automatic feeding system according to the invention, the autonomously moveable feeding device is advantageously provided with a mixing device inside the feed container for mixing feed. This offers the advantage that the separated feed is already shredded and thus easily mixable.

The invention will now be further explained with reference to the following Figures.
Figure 1 shows a first embodiment of a device according to the invention;
Figure 2 shows a second embodiment of a device according to the invention;
Figures 3A and 3B show detailed views of the cutting elements;
Figures 4A, 4B and 4C show the position of the cutting elements when cutting feed from the bulk feed stock in a top view;
Figures 5A, 5B and 5C illustrate how the feed is cut from the bulk feed stock;
Figure 6 shows an automatic feeding system according to the invention.

Compacted feed for animals, such as silage, is usually stored in a bulk feed stock, such as a silo. The feed has to be separated from the feed stock, which usually has a rectangularly shaped base and a rectangular, substantially vertical front surface. The separated feed can then be transported to the animals which are to be fed. In accordance with the invention, a feed separating device is provided comprising at least one cutting element which can be driven rotatably about an axis of rotation by a drive unit and which is mounted on a moveable frame structure in such a manner that the at least one cutting element can be moved relative to the bulk feed stock, wherein the axis of rotation of at least one cutting element is pivotably adjustable relative to the frame structure. Thus, an efficient cutting action is enabled, allowing for a simple frame structure. There is little need for (re)positioning of the frame structure when cutting the feed, making the device flexible and fast. This will be further elucidated with reference to the Figures.

The device is designed such that the moveable frame structure is suitable for repeatedly positioning the cutting element(s) above an upper edge of the bulk feed stock and then lowering the cutting element(s) in a cutting movement through the bulk feed stock. This enables a simple and energy-efficient cutting action making use of gravity: the weight of the cutting means aids in the cutting action. The moveable frame structure is provided with adjusting means for pivotably adjusting the axis of rotation of at least one cutting element relative to the frame structure between cutting movements. This allows for efficient cutting without losing time with the adjustment.

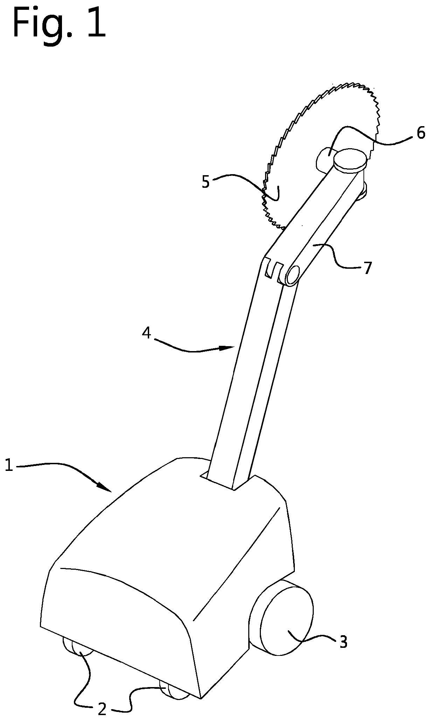

In Figure 1 a first embodiment of a device according to the invention is shown. An autonomous vehicle 1 with rear wheels 2 and (e.g. electrically) drivable front wheels 3 can move over the ground surface. A moveable frame structure 4 is mounted on the vehicle. At the end of the frame structure 4 a cutting element 5 is provided which can be driven rotatably about an axis of rotation by a drive unit 6. The cutting element 5 can be moved and positioned relative to the bulk feed stock by means of moving the vehicle 1 over the ground surface and by means of moving the frame structure 4. The axis of rotation of the cutting element 5 is mounted in a pivotably adjustable way relative to the frame structure 4.

The autonomous vehicle 1 is provided with sensors (not shown) for determining the (relative) position of the feed stock, the vehicle 1 and the cutting element 5. A control unit (not shown) connected to the sensors and the frame structure 4 is provided which is suitable for positioning the vehicle 1 and the frame 4 with the cutting element 5 in an appropriate position for cutting feed from the feed stock. Thus, a user-friendly, fully automated construction is provided. The sensors may e.g. be electro-optical sensors, such as a camera, which can be used to determine the profile of the feed stock front surface. Machine learning methods like deep learning can be used to increase the accuracy.

In the first embodiment of Figure 1, the frame structure 4 is constituted by a moveable arm 7 and the device comprises a single cutting element 5 mounted on the moveable arm 7. This is a simple and cheap embodiment. The moveable arm 7 is suitable for, firstly, positioning the cutting element 5 above an upper edge of the bulk feed stock and then lowering the cutting element 5 in a first cutting movement through the bulk feed stock, the axis of rotation of the cutting element 5 being oriented under a first angle to the normal of the feed stock front surface, and secondly, positioning the cutting element 5 slightly laterally displaced above the upper edge of the bulk feed stock and then lowering the cutting element 5 in a second cutting movement through the bulk feed stock, the axis of rotation of the cutting element 5 being oriented under a second angle to the normal of the feed stock front surface, the second angle being different from, preferably substantially opposite to the first angle. In this way, a triangular, cylindrical part can be cut out.

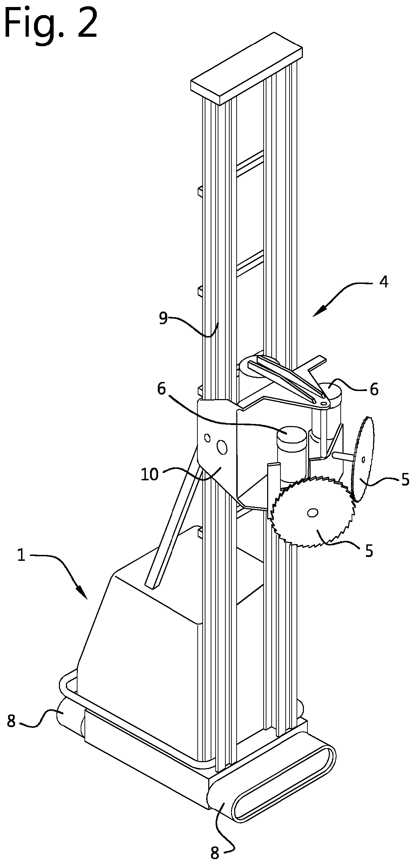

Figure 2 shows a second embodiment of a device according to the invention. Here, the device comprises two cutting elements 5 mounted adjacently on the frame structure 4, their axes of rotation extending in different, substantially horizontal planes. This constitutes a more powerful, alternative embodiment. Again, the device is construed as an autonomous vehicle 1. Of course, also non-autonomous constructions are possible. The vehicle 1 can move over the ground surface with the aid of drivable caterpillar treads 8. Other constructions with wheels or the like are also possible.

A moveable frame structure 4 is mounted on the vehicle, comprising a substantially vertical rail 9 along which a cutting frame 10 can be moved up and down. At the front end of the cutting frame 10 two cutting elements 5 are provided which can be driven rotatably about an axis of rotation by a respective drive unit 6. The cutting elements 5 can be moved and positioned relative to the bulk feed stock by means of moving the vehicle 1 over the ground surface and by means of moving the frame structure 4. The axis of rotation of the cutting elements 5 is again mounted in a pivotably adjustable way relative to the frame structure 4, in this case relative to the cutting frame 10. The cutting elements 5 are vertically not on the same level, as will be explained below.

Again, the autonomous vehicle 1 is provided with sensors (not shown) for determining the (relative) position of the feed stock, the vehicle 1 and the cutting elements 5. A control unit (not shown) connected to the sensors and the frame structure 4 is provided which is suitable for positioning the vehicle 1 and the frame 4 with the cutting elements 5 in an appropriate position for cutting feed from the feed stock. Thus, a user-friendly, fully automated construction is provided. The frame structure 4 on the vehicle 1 is capable of providing a movement of the cutting elements 5 in three dimensions relative to the bulk feed stock. This provides versatility and efficiency.

The axes of rotation of the cutting elements 5 are individually or jointly adjustable relative to the frame structure 4. Thus, an efficient and simple construction is provided. Preferably, the cutting element 5 comprises a circular saw blade. This constitutes a very energy-efficient solution. The circular saw blade is drivable by an electric motor. This enables an easy control, e.g. with an adjustable speed of revolution.

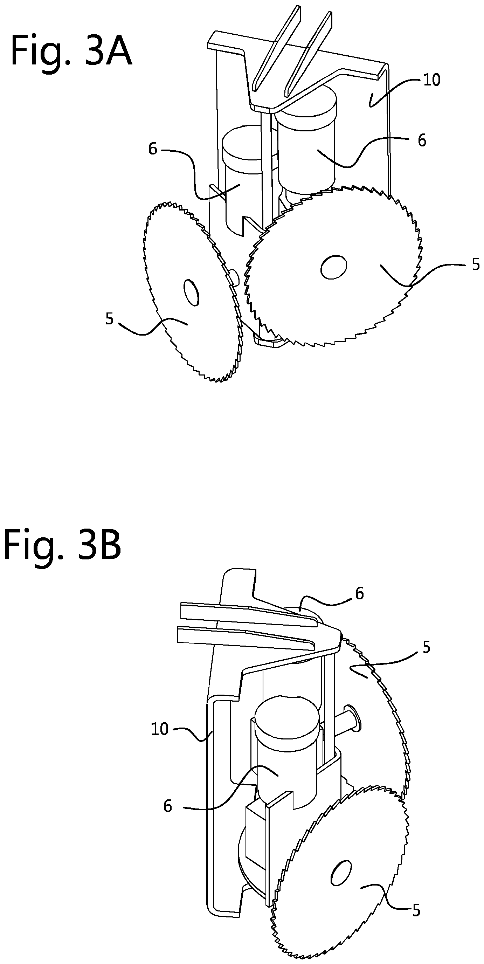

Figures 3A and 3B show detailed views of the cutting elements. The cutting frame 10 is provided with two cutting elements 5, each having their own drive unit 6, e.g. an electric motor. This enables an easy independent control, e.g. with an adjustable speed of revolution. Preferably, the cutting elements 5 comprise a circular saw blade. This constitutes a very energy-efficient solution.

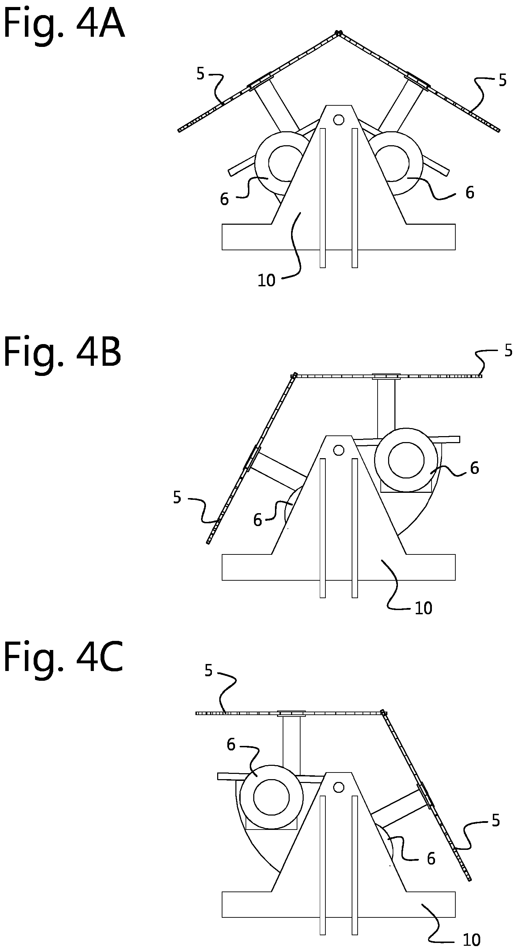

The axes of rotation of the two cutting elements 5 extend in different, substantially horizontal planes: the cutting elements 5 are vertically not on the same level. This offers the advantage that the saw blades can overlap one another slightly, seen in vertical direction, which enables a clean cut. This will be further elucidated with reference to Figure 4. The axes of rotation of the cutting elements 5 can be swivelled relative to the cutting frame 10, preferably jointly.

Figures 4A, 4B and 4C show the position of the cutting elements when cutting feed from the bulk feed stock in a top view. The axes of rotation of the cutting elements 5, seen in vertical direction, extend substantially under an angle of 60 degrees to one another, the circumferences of the cutting elements 5, again seen in vertical direction, slightly overlapping one another. This has proven to be a highly efficient embodiment. The overlapping cutting elements 5 (seen in vertical direction) allow for a clean cut. The rotation axes of the cutting elements 5, positioned vertically on different levels, can be positioned closer to one another than would have been the case if the cutting elements 5 would have been on the same level vertically.

The frame structure 4 with the rail 9 and the cutting frame 10 is suitable for, firstly, positioning the cutting elements 5 above an upper edge of the bulk feed stock and then lowering the cutting elements 5 in a first cutting movement through the bulk feed stock, the axes of rotation of the cutting elements 5 in their respective horizontal planes being oriented substantially symmetrically to the normal of the substantially vertical feed stock front surface under angles of substantially 30 degrees (Figure 4A), and secondly, repeatedly positioning the cutting elements 5 slightly laterally displaced above the upper edge of the bulk feed stock and then lowering the cutting elements 5 in a further cutting movement through the bulk feed stock, the axes of rotation of the cutting elements 5 in their respective horizontal planes being oriented under angles of substantially 0 degrees and 60 degrees (Figures 4C, 4B), respectively, to the normal of the substantially vertical feed stock front surface. In this way, the first cutting movement 'opens up' the feed stock front surface, enabling efficient cutting in the further cutting movements.

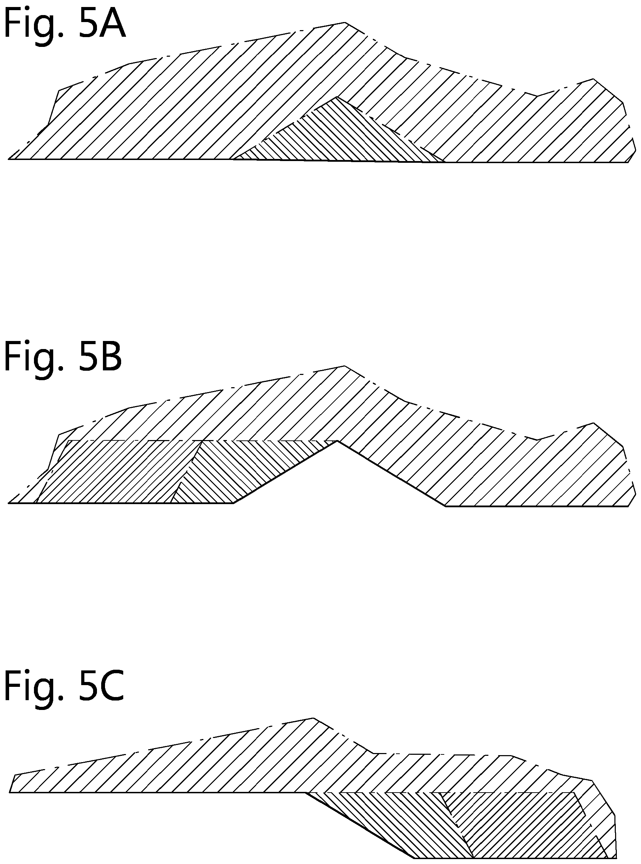

Figures 5A, 5B and 5C illustrate how the feed is cut from the bulk feed stock. The larger hatched surface represents the bulk feed stock (in a top view), the smaller hatched portions represent the gaps cut out successively by the device. The first cutting movement (Figure 5A) opens up the feed stock front surface, enabling efficient cutting in the further cutting movements. Figure 5B corresponds to the configuration of Figure 4B, the cutting frame 10 being moved slightly to the left each time. Figure 5C corresponds to the configuration of Figure 4C, the cutting frame 10 being moved slightly to the right each time.

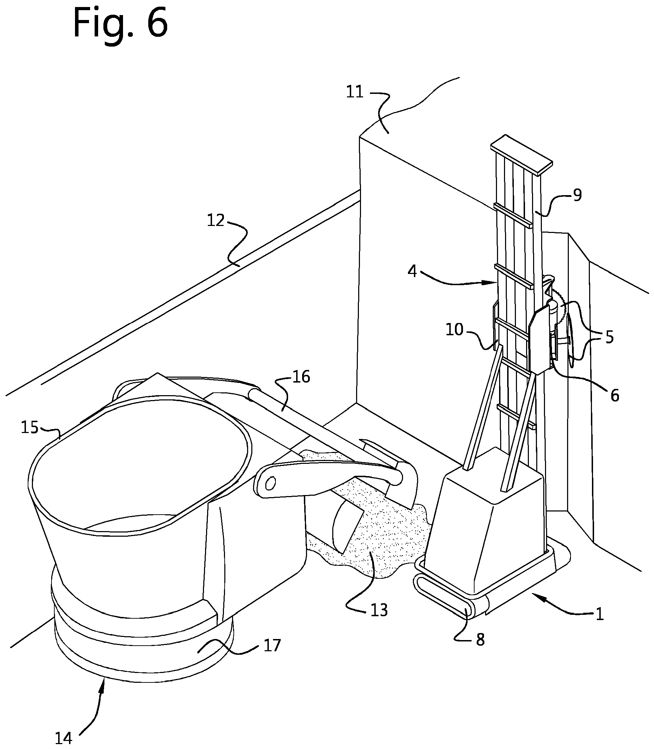

Figure 6 shows an automatic feeding system according to the invention. The automatic feeding system is provided with an autonomously moveable feeding device 14 for feeding animals, said device comprising a feed container 15 for accommodating feed, an automatic loading device 16 for loading feed into the feed container 15, and a feed dispensing device (not shown) for dispensing feed from the feed container 15, wherein a device for separating compacted feed from a bulk feed stock 11 in accordance with the invention and described before is used to provide separated feed for the automatic loading device 16.

The device according to the invention can be used in an automatic feeding system, such as the Lely Vector®, for processing feed for livestock. By means of an automatic loading device 16 the feed 13 separated from the bulk feed stock 11 can be automatically loaded into the feed container 15. The feed container 15 has a dispensing opening (not shown) through which the feed can be dispensed automatically at the appropriate location. The autonomously moveable feeding device 14 is advantageously provided with a mixing device (not shown) inside the feed container for mixing feed. This offers the advantage that the separated feed is already shredded and thus easily mixable. An undercarriage 17 serves to move the device as a whole. This makes it possible to dispense feed at different locations, for example in a feed alley. When used in an automatic feeding system, such as the Lely Vector®, the feeding device is self-propelled and to this end provided with a drive means and a control means, likewise not shown here. The device can move over the ground floor autonomously. A side wall 12 delimits the barn and/or the bulk feed stock 11.

The illustrated system is particularly suitable for straw, grass and grass products which have to be cut and/or mixed. This takes place in the feed container 15, which is a receptacle with a substantially upright side wall. The receptacle is slightly elongate in order to prevent feed from just being rotated without being mixed or cut. This mixing and/or cutting is carried out here by means of a mixing device (not shown) which can comprise an auger. If desired, it can also comprise a bottom scraper.

Thus, an improved automatic feeding system is provided, wherein the autonomously moveable feeding device 14 itself does not have to separate the feed from the bulk feed stock 11, which would be too energy-consuming.

## Claims

1. Device for separating compacted feed, such as silage, from a bulk feed stock (11), such as a silo, said device comprising at least one cutting element (5) which can be driven rotatably about an axis of rotation by a drive unit (6) and which is mounted on a moveable frame structure (4) in such a manner that the at least one cutting element (5) can be moved relative to the bulk feed stock (11), wherein the axis of rotation of at least one cutting element (5) is pivotably adjustable relative to the frame structure (4), **characterised in that** the device comprises two cutting elements (5) mounted adjacently on the frame structure (4), their axes of rotation extending in different, substantially horizontal planes.

2. Device according to claim 1, wherein the moveable frame structure (4) is suitable for repeatedly positioning the cutting element(s) (5) above an upper edge of the bulk feed stock (11) and then lowering the cutting element(s) (5) in a cutting movement through the bulk feed stock (11).

3. Device according to claim 2, wherein the moveable frame structure (4) is provided with adjusting means for pivotably adjusting the axis of rotation of at least one cutting element (5) relative to the frame structure (4) between cutting movements.

4. Device according to any one of claims 1 - 3, wherein the frame structure (4) is mounted on an autonomous vehicle (1).

5. Device according to claim 4, wherein the autonomous vehicle (1) is provided with sensors for determining the (relative) position of the feed stock (11), the vehicle (1) and the cutting element(s) (5), and a control unit connected to the sensors and the frame structure (4) and suitable for positioning the vehicle (1) and the frame (4) with the cutting element(s) (5).

6. Device according to any one of claims 1 - 5, wherein the frame structure (4) comprises a moveable arm (7) and the device comprises a single cutting element (5) mounted on the moveable arm (7).

7. Device according to claim 6, wherein the moveable arm (7) is suitable for, firstly, positioning the cutting element (5) above an upper edge of the bulk feed stock (11) and then lowering the cutting element (5) in a first cutting movement through the bulk feed stock (11), the axis of rotation of the cutting element (5) being oriented under a first angle to the normal of the feed stock front surface, and secondly, positioning the cutting element (5) slightly laterally displaced above the upper edge of the bulk feed stock (11) and then lowering the cutting element (5) in a second cutting movement through the bulk feed stock (11), the axis of rotation of the cutting element (5) being oriented under a second angle to the normal of the feed stock front surface, the second angle being different from, preferably substantially opposite to the first angle.

8. Device according to any one of claims 1-7, wherein the axes of rotation of the cutting elements (5) are individually or jointly adjustable relative to the frame structure (4).

9. Device according to any one of claims 1-8, wherein the axes of rotation of the cutting elements (5), seen in vertical direction, extend substantially under an angle of 60 degrees to one another, the circumferences of the cutting elements (5), again seen in vertical direction, slightly overlapping one another.

10. Device according to claim 9, wherein the frame structure (4) is suitable for, firstly, positioning the cutting elements (5) above an upper edge of the bulk feed stock (11) and then lowering the cutting elements (5) in a first cutting movement through the bulk feed stock (11), the axes of rotation of the cutting elements (5) in their respective horizontal planes being oriented substantially symmetrically to the normal of the substantially vertical feed stock front surface under angles of substantially 30 degrees, and secondly, repeatedly positioning the cutting elements (5) slightly laterally displaced above the upper edge of the bulk feed stock (11) and then lowering the cutting elements (5) in a further cutting movement through the bulk feed stock (11), the axes of rotation of the cutting elements (5) in their respective horizontal planes being oriented under angles of substantially 0 degrees and 60 degrees, respectively, to the normal of the substantially vertical feed stock front surface.

11. Device according to any one of claims 1 - 10, wherein the at least one cutting element (5) comprises a circular saw blade (5), preferably
drivable by an electric motor (6).

12. Device according to any one of claims 1 - 11, wherein the frame structure (4) is capable of providing a movement of the at least one cutting element (5) in three dimensions relative to the bulk feed stock (11).

13. Automatic feeding system with an autonomously moveable feeding device (14) for feeding animals, said device comprising a feed container (15) for accommodating feed, an automatic loading device (16) for loading feed into the feed container (15), and a feed dispensing device for dispensing feed from the feed container (15), wherein a device for separating compacted feed from a bulk feed stock (11) according to anyone of the previous claims is used to provide separated feed (13) for the automatic loading device (16).

14. Automatic feeding system according to claim 13, wherein the autonomously moveable feeding device (14) is provided with a mixing device inside the feed container (15) for mixing feed.

## Patentansprüche

1. Vorrichtung zum Trennen von verdichtetem Tierfutter, wie Silage, aus einem Massefutterrohstoff (11), wie einem Silo, die Vorrichtung umfassend zumindest ein Schneidelement (5), das durch eine Antriebseinheit (6) drehbar um eine Drehachse angetrieben werden kann und das derart an einer bewegbaren Rahmenstruktur (4) befestigt ist, dass das zumindest eine Schneidelement (5) bezogen auf den Massefutterrohstoff (11) bewegt werden kann, wobei die Drehachse zumindest eines Schneidelements (5) bezogen auf die Rahmenstruktur (4) schwenkverstellbar ist, **dadurch gekennzeichnet, dass** die Vorrichtung zwei Schneidelemente (5) umfasst, die benachbart an der Rahmenstruktur (4) befestigt sind, wobei sich ihre Drehachsen in verschiedene im Wesentlichen horizontale Ebenen erstrecken.

2. Vorrichtung nach Anspruch 1, wobei die bewegbare Rahmenstruktur (4) zum wiederholten Anordnen des Schneidelements/der Schneidelemente (5) oberhalb einer oberen Kante des Massefutterrohstoffs (11) und dann Absenken des Schneidelements/der Schneidelemente (5) in einer Schneidbewegung durch den Massefutterrohstoff (11) geeignet ist.

3. Vorrichtung nach Anspruch 2, wobei die bewegbare Rahmenstruktur (4) mit einem Einstellmittel zum Schwenkverstellen der Drehachse zumindest eines Schneidelements (5) bezogen auf die Rahmenstruktur (4) zwischen Schneidbewegungen versehen ist.

4. Vorrichtung nach einem der Ansprüche 1-3, wobei die Rahmenstruktur (4) an einem autonomen Fahrzeug (1) befestigt ist.

5. Vorrichtung nach Anspruch 4, wobei das autonome Fahrzeug (1) mit Sensoren zum Bestimmen der (relativen) Position des Futterrohstoffs (11), des Fahrzeugs (1) und des Schneidelements/der Schneidelemente (5) und einer Steuereinheit, die mit den Sensoren und der Rahmenstruktur (4) verbunden und zum Anordnen des Fahrzeugs (1) und des Rahmens (4) mit dem Schneidelement/den Schneidelementen (5) geeignet ist, versehen ist.

6. Vorrichtung nach einem der Ansprüche 1-5, wobei die Rahmenstruktur (4) einen bewegbaren Arm (7) umfasst und die Vorrichtung ein einzelnes Schneidelement (5), das an dem bewegbaren Arm (7) befestigt ist, umfasst.

7. Vorrichtung nach Anspruch 6, wobei der bewegbare Arm (7) erstens zum Anordnen des Schneidelements (5) oberhalb einer oberen Kante des Massefutterrohstoffs (11) und dann Absenken des Schneidelements (5) in einer ersten Schneidbewegung durch den Massefutterrohstoff (11), wobei die Drehachse des Schneidelements (5) unter einem ersten Winkel zur Normalen der Futterrohstoffvorderseite ausgerichtet ist, und zweitens zum Anordnen des Schneidelements (5) ein wenig seitlich versetzt oberhalb der oberen Kante des Massefutterrohstoffs (11) und dann Absenken des Schneidelements (5) in einer zweiten Schneidbewegung durch den Massefutterrohstoff (11), wobei die Drehachse des Schneidelements (5) unter einem zweiten Winkel zur Normalen der Futterrohstoffvorderseite ausgerichtet ist, wobei der zweite Winkel vom ersten Winkel verschieden, vorzugsweise diesem im Wesentlichen entgegengesetzt, ist, geeignet ist.

8. Vorrichtung nach einem der Ansprüche 1-7, wobei die Drehachsen der Schneidelemente (5) bezogen auf die Rahmenstruktur (4) einzeln oder gemeinsam verstellbar sind.

9. Vorrichtung nach einem der Ansprüche 1-8, wobei die Drehachsen der Schneidelemente (5), in vertikaler Richtung gesehen, sich im Wesentlichen unter einem Winkel von 60 Grad zueinander erstrecken, wobei sich die Umfänge der Schneidelemente (5), erneut in vertikaler Richtung gesehen, ein wenig überlappen.

10. Vorrichtung nach Anspruch 9, wobei die Rahmenstruktur (4) erstens zum Anordnen der Schneidelemente (5) oberhalb einer oberen Kante des Massefutterrohstoffs (11) und dann Absenken der Schneidelemente (5) in einer ersten Schneidbewegung durch den Massefutterrohstoff (11), wobei die Drehachsen der Schneidelemente (5) in ihren jeweiligen horizontalen Ebenen im Wesentlichen symmetrisch zur Normalen der im Wesentlichen vertikalen Futterrohstoffvorderseite unter Winkeln von im Wesentlichen 30 Grad ausgerichtet sind, und zweitens zum wiederholten Anordnen der Schneidelemente (5) ein wenig seitlich versetzt oberhalb der oberen Kante des Massefutterrohstoffs (11) und dann Absenken der Schneidelemente (5) in einer weiteren Schneidbewegung durch den Massefutterrohstoff (11), wobei die Drehachsen der Schneidelemente (5) in ihren jeweiligen horizontalen Ebenen unter Winkeln von im Wesentlichen 0 Grad bzw. 60 Grad zur Normalen der im Wesentlichen vertikalen Futterrohstoffvorderseite ausgerichtet sind, geeignet ist.

11. Vorrichtung nach einem der Ansprüche 1-10, wobei das zumindest eine Schneidelement (5) ein vorzugsweise durch einen Elektromotor (6) antreibbares Kreissägeblatt (5) umfasst.

12. Vorrichtung nach einem der Ansprüche 1-11, wobei die Rahmenstruktur (4) zum Bereitstellen einer Bewegung des zumindest einen Schneidelements (5) in drei Dimensionen bezogen auf den Massefutterrohstoff (11) in der Lage ist.

13. Automatisches Fütterungssystem mit einer autonom bewegbaren Fütterungsvorrichtung (14) zum Füttern von Tieren, die Vorrichtung umfassend einen Futterbehälter (15) zum Aufnehmen von Tierfutter, eine automatische Ladevorrichtung (16) zum Laden von Tierfutter in den Futterbehälter (15) und eine Futterausgabevorrichtung zum Ausgeben von Tierfutter aus dem Futterbehälter (15), wobei eine Vorrichtung zum Trennen von verdichtetem Tierfutter aus einem Massefutterrohstoff (11) nach einem der vorhergehenden Ansprüche zum Bereitstellen von getrenntem Tierfutter (13) für die automatische Ladevorrichtung (16) verwendet wird.

14. Automatisches Fütterungssystem nach Anspruch 13, wobei die autonom bewegbare Fütterungsvorrichtung (14) mit einer Mischvorrichtung innerhalb des Futterbehälters (15) zum Mischen von Tierfutter versehen ist.

## Revendications

1. Dispositif de séparation d'alimentation compactée, telle que de l'ensilage, d'un stock d'alimentation en vrac (11), tel qu'un silo, ledit dispositif comprenant au moins un élément de coupe (5) qui peut être entraîné en rotation autour d'un axe de rotation par une unité d'entraînement (6) et qui est monté sur une structure de cadre mobile (4) de telle manière que l'au moins un élément de coupe (5) puisse être déplacé par rapport au stock d'alimentation en vrac (11), l'axe de rotation d'au moins un élément de coupe (5) pouvant être réglé de manière pivotante par rapport à la structure de cadre (4), **caractérisé en ce que** le dispositif comprend deux éléments de coupe (5) montés de manière adjacente sur la structure de cadre (4), leurs axes de rotation s'étendant dans des plans différents, sensiblement horizontaux.

2. Dispositif selon la revendication 1, la structure de cadre mobile (4) étant appropriée pour positionner de manière répétée le ou les éléments de coupe (5) au-dessus d'un bord supérieur du stock d'alimentation en vrac (11), puis pour abaisser le ou les éléments de coupe (5) dans un mouvement de coupe à travers le stock d'alimentation en vrac (11).

3. Dispositif selon la revendication 2, la structure de cadre mobile (4) étant munie d'un moyen de réglage pour régler de manière pivotante l'axe de rotation d'au moins un élément de coupe (5) par rapport à la structure de cadre (4) entre des mouvements de coupe.

4. Dispositif selon l'une quelconque des revendications 1 à 3, la structure de cadre (4) étant montée sur un véhicule autonome (1).

5. Dispositif selon la revendication 4, le véhicule autonome (1) étant muni de capteurs pour déterminer la position (relative) du stock d'alimentation (11), du véhicule (1) et du ou des éléments de coupe (5), et d'une unité de commande reliée aux capteurs et à la structure de cadre (4) et conçue pour positionner le véhicule (1) et le cadre (4) avec le ou les éléments de coupe (5).

6. Dispositif selon l'une quelconque des revendications 1 à 5, la structure de cadre (4) comprenant un bras mobile (7) et le dispositif comprenant un seul élément de coupe (5) monté sur le bras mobile (7) .

7. Dispositif selon la revendication 6, le bras mobile (7) étant approprié pour, premièrement, positionner l'élément de coupe (5) au-dessus d'un bord supérieur du stock d'alimentation en vrac (11) et ensuite abaisser l'élément de coupe (5) dans un premier mouvement de coupe à travers le stock d'alimentation en vrac (11), l'axe de rotation de l'élément de coupe (5) étant orienté sous un premier angle par rapport à la normale de la surface avant de stock d'alimentation, et deuxièmement, positionner l'élément de coupe (5) légèrement décalé latéralement au-dessus du bord supérieur du stock d'alimentation en vrac (11) et ensuite abaisser l'élément de coupe (5) dans un second mouvement de coupe à travers le stock d'alimentation en vrac (11), l'axe de rotation de l'élément de coupe (5) étant orienté sous un second angle par rapport à la normale de la surface avant de stock d'alimentation, le second angle étant différent, de préférence sensiblement opposé, au premier angle.

8. Dispositif selon l'une quelconque des revendications 1 à 7, les axes de rotation des éléments de coupe (5) étant réglables individuellement ou conjointement par rapport à la structure de cadre (4).

9. Dispositif selon l'une quelconque des revendications 1 à 8, les axes de rotation des éléments de coupe (5), vus en direction verticale, s'étendant sensiblement sous un angle de 60 degrés l'un par rapport à l'autre, les circonférences des éléments de coupe (5), toujours vus en direction verticale, se chevauchant légèrement l'une l'autre.

10. Dispositif selon la revendication 9, la structure de cadre (4) étant appropriée pour, premièrement, positionner les éléments de coupe (5) au-dessus d'un bord supérieur du stock d'alimentation en vrac (11) et ensuite abaisser les éléments de coupe (5) dans un premier mouvement de coupe à travers le stock d'alimentation en vrac (11), les axes de rotation des éléments de coupe (5) dans leurs plans horizontaux respectifs étant orientés sensiblement symétriquement à la normale de la surface avant de stock d'alimentation sensiblement verticale sous des angles de sensiblement 30 degrés, et deuxièmement, positionner de manière répétée les éléments de coupe (5) légèrement décalés latéralement au-dessus du bord supérieur du stock d'alimentation en vrac (11) et ensuite abaisser les éléments de coupe (5) dans un mouvement de coupe supplémentaire à travers le stock d'alimentation en vrac (11), les axes de rotation des éléments de coupe (5) dans leurs plans horizontaux respectifs étant orientés sous des angles de sensiblement 0 degré et 60 degrés, respectivement, par rapport à la normale de la surface avant de stock d'alimentation sensiblement verticale.

11. Dispositif selon l'une quelconque des revendications 1 à 10, l'au moins un élément de coupe (5) comprenant une lame de scie circulaire (5), de préférence pouvant être entraînée par un moteur électrique (6).

12. Dispositif selon l'une quelconque des revendications 1 à 11, la structure de cadre (4) pouvant assurer un mouvement de l'au moins un élément de coupe (5) en trois dimensions par rapport au stock d'alimentation en vrac (11).

13. Système d'alimentation automatique avec un dispositif d'alimentation à déplacement autonome (14) pour alimenter les animaux, ledit dispositif comprenant un conteneur d'alimentation (15) pour contenir de l'alimentation, un dispositif de chargement automatique (16) pour charger de l'alimentation dans le conteneur d'alimentation (15), et un dispositif de distribution d'alimentation pour distribuer de l'alimentation à partir du conteneur d'alimentation (15), un dispositif pour séparer l'alimentation compactée d'un stock d'alimentation en vrac (11) selon l'une quelconque des revendications précédentes étant utilisé pour fournir une alimentation séparée (13) pour le dispositif de chargement automatique (16).

14. Système d'alimentation automatique selon la revendication 13, le dispositif d'alimentation à déplacement autonome (14) étant muni d'un dispositif de mélange à l'intérieur du conteneur d'alimentation (15) pour mélanger l'alimentation.
